# EUROPÄISCHE PATENTSCHRIFT

(11) **EP 1 310 698 B1**
(45) Veröffentlichungstag und Bekanntmachung des Hinweises auf die Patenterteilung: **03.08.2005**
(21) Anmeldenummer: 02023758.2
(22) Anmeldetag: 24.10.2002
(51) Int. Cl.: F16F 7/12, B60R 21/04

(54) **Deformationselement, insbesondere für Kraftfahrzeuge**
Deformable element, in particular for automotive vehicles
Elément déformable, notamment pour véhicules automobiles

(30) Priorität: 07.11.2001 DE 10154593
(43) Veröffentlichungstag der Anmeldung: 14.05.2003
(73) Patentinhaber: ArvinMeritor GmbH, 63128 Dietzenbach (DE)
(72) Erfinder: Schönebeck, Horst, 63571 Gelnhausen (DE)
(74) Vertreter: Sties, Jochen, Dipl.-Ing.

(56) Entgegenhaltungen:
- DE-A- 4 426 291
- FR-A- 1 507 267
- FR-A- 2 729 621
- US-A- 3 583 530
- PATENT ABSTRACTS OF JAPAN vol. 1998, no. 06, 30. April 1998 (1998-04-30) -& JP 10 029470 A (TOYOTA MOTOR CORP), 3. Februar 1998 (1998-02-03)
- PATENT ABSTRACTS OF JAPAN vol. 1999, no. 04, 30. April 1999 (1999-04-30) -& JP 11 011239 A (TOYOTA MOTOR CORP), 19. Januar 1999 (1999-01-19)

## Beschreibung

Die Erfindung betrifft ein Deformationselement, insbesondere für Kraftfahrzeuge.

Deformationselemente werden in verschiedenen Teilen der Fahrzeugkarosserie eingesetzt, beispielsweise Stoßfängern, Innenverkleidung, etc., um kinetische Energie in plastische Verformung des Materials des Deformationselementes umzusetzen. Auf diese Weise sollen die negativen Auswirkungen einer Kollision, beispielsweise des Fahrzeugs mit einem Hindernis oder eines Körperteils des Fahrzeuginsassen mit der Innenverkleidung des Fahrzeugs, verringert werden.

Bekannt sind insbesondere flächige Deformationselemente, die im Falle einer Kollision durch Verformung über eine möglichst große Fläche wirken. Nachteilig ist hierbei, daß der Verlauf der Deformationskraft in Abhängigkeit vom Deformationsweg nur unzureichend beeinflußt werden kann.

Aus der JP-A-10029470, die als nächstliegender Stand der Technik betrachtet wird, ist ein Deformationselement bekannt, das aus zwei Basisteilen besteht. Eines der Basisteile ist mit hohlen Kegeln versehen, die von seiner Oberfläche abstehen. Jedem Kegel ist ein Hohlzylinder zugeordnet, der auf der Oberfläche des anderen Basisteils angeordnet ist. Der Kegel kann in den Hohlzylinder eingeschoben werden, wobei es zur Verformung von Kegel und Zylinder kommt.

Aus der DE-A-44 26 291 ist eine Innenverkleidung für Kraftfahrzeuge bekannt, die mit kegelstumpfförmigen Vorsprüngen versehen ist. Diese bestehen aus einem Kunststoffschaum, stützen sich an der Fahrzeugkarosserie ab und dienen als Aufprallschutz.

Aus der FR-A-2 729 621 ist eine Kopfstütze bekannt, die mit einem Aufprallschutz oder Deformationselement versehen ist. Dieser besteht aus einem ersten und einem zweiten Basisteil, die beide als Platte ausgeführt sind. Eines der Basisteile ist mit kegelstumpfförmigen Vertiefungen versehen, denen kegelstumpfförmige Vorsprünge zugeordnet sind, die auf dem anderen Basisteil ausgebildet sind. Die Vorsprünge können entgegen einem Verformungs- und Reibungswiderstand in die Vertiefungen eingeschoben werden.

Die Aufgabe der Erfindung besteht darin, ein Deformationselement zu schaffen, bei dem die Kennlinie von Deformationskraft über Deformationsweg besser an die jeweiligen Anforderungen angepaßt werden kann.

Zu diesem Zweck ist erfindungsgemäß ein Deformationselement mit einem ersten Basisteil und einem zweiten Basisteil vorgesehen, wobei das erste Basisteil mindestens einen Vorsprung aufweist, der sich ausgehend von dem ersten Basisteil verjüngt, und das zweite Basisteil mindestens eine dem Vorsprung zugeordnete Vertiefung aufweist, die sich von ihrer Vorderseite zur Rückseite hin verjüngt der eingangs genannten Art vorgesehen, wobei das zweite Basisteil aus einem geschäumten Kunststoffmaterial besteht. Dieses Deformationselement beruht auf dem Grundgedanken, zur Energiewandlung zwei Teile relativ zueinander zu verschieben, wobei das eine Teil in das andere eindringt und es dabei zu plastischen Verformungen kommt. Die Kennlinie von Deformationskraft über Deformationsweg kann dabei in sehr einfacher Weise durch die Auswahl der Geometrie des Vorsprungs des ersten Basisteils und der Vertiefung im zweiten Basisteil eingestellt werden. Diese Kennlinie kann außerdem durch die Auswahl der Materialien beeinflußt werden, aus denen der Vorsprung und das zweite Basisteil bestehen. Da das zweite Basisteil geschäumt ist, kann es mit geringem Aufwand als integrierter Bestandteil eine geschäumten Bauteils eines Fahrzeuges ausgeführt sein, beispielsweise als Teil der Innenverkleidung eines Fahrzeugdachs oder einer Fahrzeugtür.

Gemäß einer bevorzugten Ausführungsform der Erfindung ist vorgesehen, daß der Vorsprung die Form eines Kegelstumpfes hat und daß die Vertiefung ebenfalls die Form eines Kegelstumpfes hat. Die Kegelform bietet den Vorteil, daß eine automatische Zentrierung zwischen den beiden Basisteilen auftritt. Weiterhin kann durch die geeignete Auswahl des Kegelwinkels die Kennlinie von Deformationskraft über Deformationsweg in der gewünschten Weise eingestellt werden.

Alternativ zur kegelstumpfförmigen Gestaltung des Vorsprungs und der Vertiefung könnte auch eine pyramidenstumpfförmige Gestaltung oder auch eine unregelmäßige Form verwendet werden.

Vorzugsweise ist vorgesehen, daß die Seitenfläche des Vorsprungs mit einer Mittelachse des Vorsprungs einen größeren Winkel einschließt als die Seitenfläche der Vertiefung mit einer Mittelachse der Vertiefung. Auf diese Weise ergibt sich beim Eindringen des Vorsprungs in die Vertiefung eine überproportional ansteigende Deformationskraft, da die Querschnittsunterschiede zwischen dem Vorsprung und der Vertiefung mit zunehmendem Deformationsweg anwachsen.

Es ist auch möglich, daß der Kegelwinkel des Vorsprungs bzw. der Vertiefung variiert. Auf diese Weise ergibt sich eine weitere Möglichkeit, den Verlauf der Deformationskraft in Abhängigkeit vom Deformationsweg zu variieren.

Die beiden Basisteile können plattenförmig ausgeführt sein und mehrere Vorsprünge bzw. Vertiefungen aufweisen. Auf diese Weise läßt sich ein flächiges Deformationselement erzielen, das eine gewünschte hohe Deformationskraft bereitstellen kann. Auch kann die Deformationskraft sich entlang dem Basisteil ändern, beispielsweise auf einer Hälfte größer sein als auf der anderen Hälfte. Dies kann beispielsweise für den Anwendungsfall als Aufprallschutz für einen Kopf eines Fahrzeuginsassen dahingehend genutzt werden, für den wahrscheinlichen Kontaktbereich mit dem Kopf eines großen und entsprechend schweren Fahrzeuginsassen eine höhere Deformationskraft vorzusehen als im wahrscheinlichen Kontaktbereich mit dem Kopf eines kleineren und entsprechend leichteren Fahrzeuginsassen.

Gemäß der bevorzugten Ausführungsform der Erfindung ist vorgesehen, daß das zweite Basisteil aus einem Material besteht, das weicher ist als das Material der Vorsprünge. Dies ermöglicht ein gut kontrollierbares Deformationsverhalten.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen Schnittansicht ein erfindungsgemäßes Deformationselement in einem Ausgangszustand;
- Figur 2 das Deformationselement von Figur 1 während der Energiewandlung;
- Figur 3 in einer schematischen Schnittansicht einen Vorsprung und eine Vertiefung des Deformationselementes im Ausgangszustand; und
- Figur 4 in einer schematischen Ansicht die Vertiefung von Figur 3 überlagert mit dem Vorsprung von Figur 3.

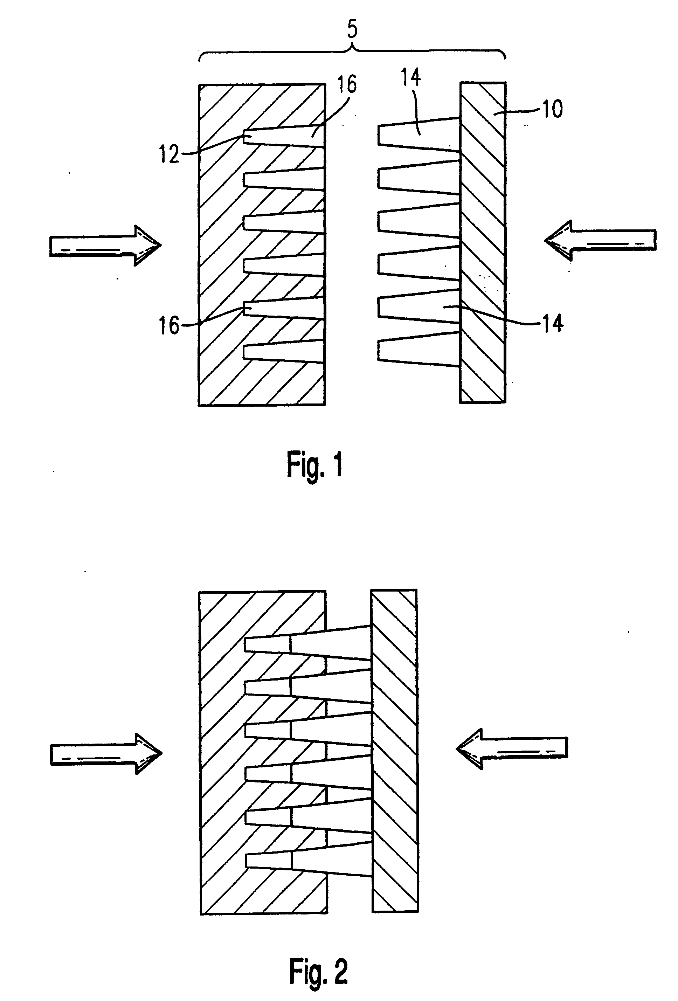

In Figur 1 ist ein Deformationselement 5 zu sehen, das ein erstes Basisteil 10 und ein zweites Basisteil 12 enthält. Das erste und das zweite Basisteil sind allgemein plattenförmig ausgeführt und können beispielsweise zwischen einem Karosserieteil und einem Verkleidungsteil des Fahrzeugs oder zwischen der Fahrzeugkarosserie und einem Stoßfänger angeordnet sein.

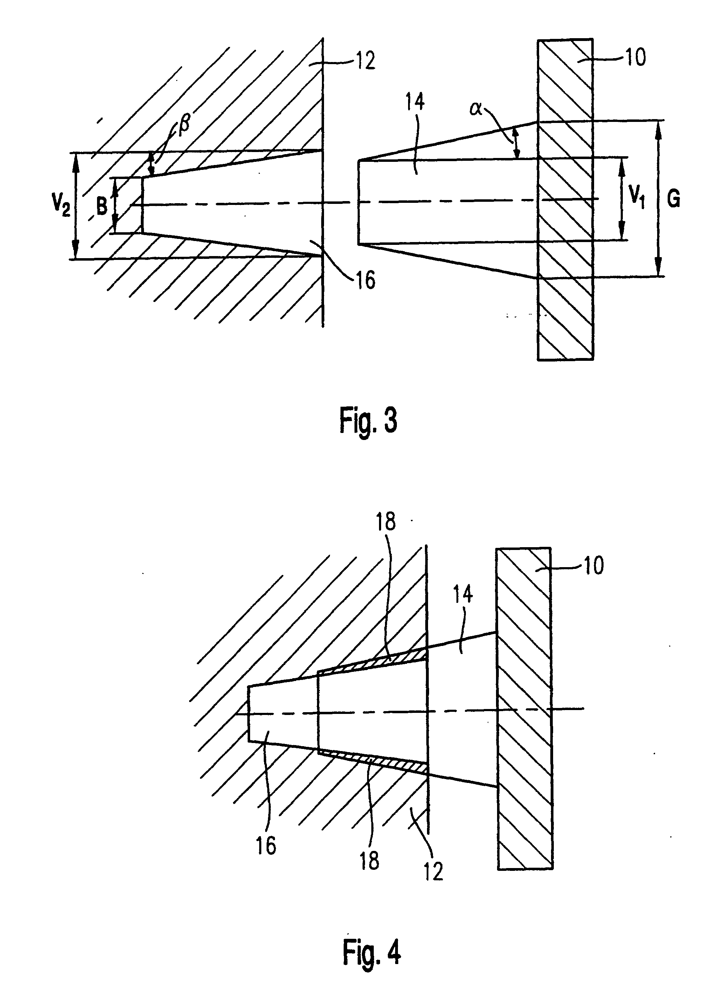

Das erste Basisteil 10 ist mit mehreren Vorsprüngen 14 versehen, die kegelstumpfförmig sind. Sie weisen somit eine Grundfläche G (siehe Figur 3), eine Vorderfläche V₁ und einen Kegelwinkel α auf. Bei der gezeigten Ausführungform sind sechs nebeneinanderliegende Vorsprünge vorgesehen; es können jedoch auch in Abhängigkeit von den jeweiligen Anforderungen mehr oder weniger Vorsprünge verwendet werden.

Das zweite Basisteil 12 weist mehrere Vertiefungen 16 auf, von denen jede einem gegenüberliegenden Vorsprung 14 des ersten Basisteils zugeordnet ist. Jede Vertiefung 16 weist eine Vorderfläche V₂ auf, eine Bodenfläche B sowie einen Kegelwinkel β.

Der Kegelwinkel α des Vorsprungs 14 ist größer gewählt als der Kegelwinkel β der Vertiefung 16. Weiterhin hat die Vorderfläche V₁ des Vorsprungs 14 einen kleineren Durchmesser als die Vorderfläche V₂ der Vertiefung 16. Außerdem ist der Durchmesser der Bodenfläche B der Vertiefung 16 kleiner ausgeführt als der Durchmesser der Vorderfläche V₁ des Vorsprungs 14. Schließlich ist der Durchmesser der Grundfläche G des Vorsprungs 14 größer als der Durchmesser der Vorderfläche V₂ der Vertiefung 16.

Im Ausgangszustand sind das erste Basisteil 10 und das zweite Basisteil 12 im Abstand voneinander angeordnet, wobei dieser Abstand deutlich kleiner sein kann als der in Figur 1 gezeigte. Das erste Basisteil 10 kann relativ zum zweiten Basisteil 12 so angeordnet sein, daß die Vorderfläche V₁ des Vorsprungs 14 der Vorderfläche V₂ der Vertiefung 16 unmittelbar gegenüberliegt oder bereits geringfügig in die Vertiefung 16 eingreift. Im Hinblick auf eine kompakte Ausgestaltung wird der Vorsprung bereits im Ausgangszustand so weit in die Vertiefung eingreifen, daß die Vorderfläche V₂ der Vertiefung den Bereich mit demselben Durchmesser des Vorsprungs berührt.

Wenn die beiden Basisteile ausgehend von dem in den Figuren 1 und 2 gezeigten Zustand in der Richtung der Pfeile der Figuren 1 und 2 ineinandergeschoben werden, ist dies kraftfrei möglich, bis die Außenfläche des Vorsprungs 14 an der Innenfläche der Vertiefung 16 anliegt. Aufgrund der speziellen Geometrie des Vorsprungs 14 und der Vertiefung 16 sowie der unterschiedlichen Kegelwinkel erfolgt die erste Berührung im Bereich der Vorderfläche V₂ der Vertiefung 16. Da es sich hier um eine Linienberührung handelt, steigt die Deformationskraft ab dieser ersten Berührung vergleichsweise sanft und nicht schlagartig an. Bei einer weiteren Relativverschiebung zwischen dem ersten und dem zweiten Basisteil kommt es jedoch zu einem überproportionalen Anstieg der Deformationskraft, da die Querschnittsdifferenz zwischen dem Vorsprung 14 und der Vertiefung 16 mit zunehmender Eindringtiefe immer größer wird. Diese Querschnittsdifferenz ist in Figur 4 als gestrichelte Fläche 18 gezeigt.

Als Material für das Deformationselement ist insbesondere ein Kunststoffschaum geeignet, wobei das Material für das zweite Basisteil 12 weicher ausgeführt wird als das Material der Vorsprünge 14. Das erste bzw. zweite Basisteil kann als integrierter Bestandteil eines geschäumten Bauteils eines Fahrzeugs ausgeführt sein, beispielsweise als Teil der Innenverkleidung eines Fahrzeugdachs oder einer Fahrzeugtür.

### Bezugszeichenliste:

- 5:: Deformationselement
- 10:: erstes Basisteil
- 12:: zweites Basisteil
- 14:: Vorsprung
- 16:: Vertiefung
- 18:: Überschneidungsfläche
- B:: Bodenfläche der Vertiefung
- G:: Grundfläche des Vorsprungs
- V₁:: Vorderfläche des Vorsprungs
- V₂:: Vorderfläche der Vertiefung
- α:: Kegelwinkel des Vorsprungs
- β:: Kegelwinkel der Vertiefung

## Patentansprüche

1. Deformationselement (5), insbesondere für Kraftfahrzeuge, mit einem ersten Basisteil (10) und einem zweiten Basisteil (12), wobei das erste Basisteil (10) mindestens einen Vorsprung (14) aufweist, der sich ausgehend von dem ersten Basisteil (10) verjüngt, **dadurch gekennzeichnet, daß** das zweite Basisteil (12) mindestens eine dem Vorsprung zugeordnete Vertiefung (16) aufweist, die sich von ihrer Vorderseite zur Rückseite hin verjüngt, wobei das zweite Basisteil (12) aus einem geschäumten Kunststoffmaterial besteht.

2. Deformationselement nach Anspruch 1, **dadurch gekennzeichnet, daß** der Vorsprung (14) die Form eines Kegelstumpfes hat.

3. Deformationselement nach Anspruch 1, **dadurch gekennzeichnet, daß** der Vorsprung (14) die Form eines Pyramidenstumpfes hat.

4. Deformationselement nach einem der vorhergehenden Ansprüche, **dadurch gekennzeichnet, daß** die Vertiefung (16) die Form eines Kegelstumpfes hat.

5. Deformationselement nach einem der Ansprüche 1 bis 3, **dadurch gekennzeichnet, daß** die Vertiefung (16) die Form eines Pyramidenstumpfes hat.

6. Deformationselement nach einem der vorhergehenden Ansprüche, **dadurch gekennzeichnet, daß** die Seitenfläche des Vorsprungs mit einer Mittelachse des Vorsprungs (14) denselben Winkel (α) einschließt wie die Seitenfläche der Vertiefung (16) mit einer Mittelachse der Vertiefung.

7. Deformationselement nach einem der Ansprüche 1 bis 5, **dadurch gekennzeichnet, daß** die Seitenfläche des Vorsprungs mit einer Mittelachse des Vorsprungs (14) einen größeren Winkel (α) einschließt als die Seitenfläche der Vertiefung (16) mit einer Mittelachse der Vertiefung.

8. Deformationselement nach einem der vorhergehenden Ansprüche, **dadurch gekennzeichnet, daß** der Winkel (α) zwischen der Seitenfläche des Vorsprungs und einer Mittelachse des Vorsprungs (14) variiert.

9. Deformationselement nach einem der vorhergehenden Ansprüche, **dadurch gekennzeichnet, daß** der Winkel (β) zwischen der Seitenfläche der Vertiefung und einer Mittelachse der Vertiefung (16) variiert.

10. Deformationselement nach einem der vorhergehenden Ansprüche, **dadurch gekennzeichnet, daß** der Querschnitt der Vorderseite (V₁) des Vorsprungs (14) kleiner ist als der Querschnitt der Vorderseite (V₂) der Vertiefung (16).

11. Deformationselement nach einem der vorhergehenden Ansprüche, **dadurch gekennzeichnet, daß** der Querschnitt der Grundfläche (G) des Vorsprungs (14) größer ist als der Querschnitt der Vorderseite (V₂) der Vertiefung (16).

12. Deformationselement nach einem der vorhergehenden Ansprüche, **dadurch gekennzeichnet, daß** die beiden Basisteile (10, 12) plattenartig ausgeführt sind und mehrere Vorsprünge (14) bzw. Vertiefungen (16) aufweisen.

13. Deformationselement nach einem der vorhergehenden Ansprüche, **dadurch gekennzeichnet, daß** das zweite Basisteil (12) aus einem Material besteht, das weicher ist als das Material der Vorsprünge (14).

14. Deformationselement nach Anspruch 13, **dadurch gekennzeichnet, daß** das erste Basisteil (10) aus einem geschäumten Kunststoffmaterial besteht.

15. Deformationselement nach einem der vorhergehenden Ansprüche, **dadurch gekennzeichnet, daß** das Basisteil (10, 12) an einem Karosserieaußenteil angebracht ist.

16. Deformationselement nach einem der vorhergehenden Ansprüche, **dadurch gekennzeichnet, daß** das Basisteil (10, 12) an einem Verkleidungsteil für den Fahrzeuginnenraum angebracht ist.

## Claims

1. A deformation element (5), in particular for a motor vehicle, comprising a first base part (10) and a second base part (12), the first base part (10) including at least one protrusion (14) which tapers starting from the first base part (10), **characterized in that** the second base part (12) includes at least one recess (16) associated with the protrusion and tapering from its front side to its rear side, the second base part (12) consisting of a foamed plastics material.

2. The deformation element according to claim 1, **characterized in that** the protrusion (14) has the shape of a truncated cone.

3. The deformation element according to claim 1, **characterized in that** the protrusion (14) has the shape of a truncated pyramid.

4. The deformation element according to any of the preceding claims, **characterized in that** the recess (16) has the shape of a truncated cone.

5. The deformation element according to any of claims 1 to 3, **characterized in that** the recess (16) has the shape of a truncated pyramid.

6. The deformation element according to any of the preceding claims, **characterized in that** the side surface of the protrusion and a middle axis of the protrusion (14) include the same angle (α) as the side surface of the recess (16) and a middle axis of the recess.

7. The deformation element according to any of claims 1 to 5, **characterized in that** the side surface of the protrusion and a middle axis of the protrusion (14) include a larger angle (α) than the side surface of the recess (16) and a middle axis of the recess.

8. The deformation element according to any of the preceding claims, **characterized in that** the angle (α) between the side surface of the protrusion and a middle axis of the protrusion (14) varies.

9. The deformation element according to any of the preceding claims, **characterized in that** the angle (β) between the side surface of the recess and a middle axis of the recess (16) varies.

10. The deformation element according to any of the preceding claims, **characterized in that** the cross-section of the front face (V₁) of the protrusion (14) is smaller than the cross-section of the front face (V₂) of the recess (16).

11. The deformation element according to any of the preceding claims, **characterized in that** the cross-section of the foot surface area (G) of the protrusion (14) is larger than the cross-section of the front face (V₂) of the recess (16).

12. The deformation element according to any of the preceding claims, **characterized in that** the two base parts (10, 12) are configured to be plate-like and include a plurality of protrusions (14) and recesses (16), respectively.

13. The deformation element according to any of the preceding claims, **characterized in that** the second base part (12) consists of a material that is softer than the material of the protrusions (14).

14. The deformation element according to claim 13, **characterized in that** the first base part (10) consists of a foamed plastics material.

15. The deformation element according to any of the preceding claims, **characterized in that** the base part (10, 12) is attached to a car body outer part.

16. The deformation element according to any of the preceding claims, **characterized in that** the base part (10, 12) is attached to a lining part for the vehicle interior space.

## Revendications

1. Elément apte à la déformation (5), en particulier pour des véhicules automobiles, comprenant une première partie de base (10) et une deuxième partie de base (12), dans lequel élément la première partie de base (10) comporte au moins une saillie (14) qui s'effile en partant de la première partie de base (10), **caractérisé en ce que** la deuxième partie de base (12) comporte au moins un évidement associé à la saillie et qui s'effile de sa face avant à sa face arrière, la deuxième partie de base (12) se composant d'une matière synthétique en mousse.

2. Elément apte à la déformation selon la revendication 1, **caractérisé en ce que** la saillie (14) est en forme de tronc de cône.

3. Elément apte à la déformation selon la revendication 1, **caractérisé en ce que** la saillie (14) est en forme de tronc de pyramide.

4. Elément apte à la déformation selon l'une des revendications précédentes, **caractérisé en ce que** l'évidement (16) est en forme de tronc de cône.

5. Elément apte à la déformation selon l'une des revendications 1 à 3, **caractérisé en ce que** l'évidement (16) est en forme de tronc de pyramide.

6. Elément apte à la déformation selon l'une des revendications précédentes, **caractérisé en ce que** la surface latérale de la saillie forme avec un axe médian de la saillie (14), le même angle (α) que la surface latérale de l'évidement (16) avec un axe médian de l'évidement.

7. Elément apte à la déformation selon l'une des revendications 1 à 5, **caractérisé en ce que** la surface latérale de la saillie forme, avec un axe médian de la saillie (14), un angle (α) plus grand que celui formé par la surface latérale de l'évidement (16) avec un axe médian de l'évidement.

8. Elément apte à la déformation selon l'une des revendications précédentes, **caractérisé en ce que** l'angle (α) entre la surface latérale de la saillie et un axe médian de la saillie (14) varie.

9. Elément apte à la déformation selon l'une des revendications précédentes, **caractérisé en ce que** l'angle (β) entre la surface latérale de l'évidement et un axe médian de l'évidement (16) varie.

10. Elément apte à la déformation selon l'une des revendications précédentes, **caractérisé en ce que** la section transversale de la face avant (V₁) de la saillie (14) est plus petite que la section transversale de la face avant (V₂) de l'évidement (16).

11. Elément apte à la déformation selon l'une des revendications précédentes, **caractérisé en ce que** la section transversale de la surface de base (G) de la saillie (14) est plus grande que la section transversale de la face avant (V₂) de l'évidement (16).

12. Elément apte à la déformation selon l'une des revendications précédentes, **caractérisé en ce que** les deux parties de base (10, 12) sont réalisées en forme de plaque et comportent plusieurs saillies (14) ou respectivement évidements (16).

13. Elément apte à la déformation selon l'une des revendications précédentes, **caractérisé en ce que** la deuxième partie de base (12) se compose d'un matériau qui est plus tendre que le matériau des saillies (14).

14. Elément apte à la déformation selon la revendication 13, **caractérisé en ce que** la première partie de base (10) se compose d'un matériau synthétique en mousse.

15. Elément apte à la déformation selon l'une des revendications précédentes, **caractérisé en ce que** la partie de base (10, 12) est montée sur une partie extérieure de carrosserie.

16. Elément apte à la déformation selon l'une des revendications précédentes, **caractérisé en ce que** la partie de base (10, 12) est montée sur une partie d'habillage pour l'habitacle du véhicule.
